# EUROPEAN PATENT SPECIFICATION

(11) **EP 3 729 929 B1**
(45) Date of publication and mention of the grant of the patent: **03.07.2024**
(21) Application number: 19217263.3
(22) Date of filing: 17.12.2019
(51) Int. Cl.: A01B 33/02, B62D 51/04

(54) **WALKING-TYPE TILLING MACHINE**
HANDGEFÜHRTE MASCHINE ZUR BODENBEARBEITUNG
ÉQUIPEMENT DE PRÉPARATION DU SOL À CONDUCTEUR MARCHANT

(30) Priority: 23.04.2019 JP 2019082214
(43) Date of publication of application: 28.10.2020
(73) Proprietor: Iseki & Co., Ltd., Matsuyama-shi, Ehime 799-2692 (JP)
(72) Inventor: KURODA, Kyosei, Tobe-cho, Iyo-gun, Ehime 791-2193 (JP); TOMIHISA, Akira, Tobe-cho, Iyo-gun, Ehime 791-2193 (JP); MIYAUCHI, Masao, Tobe-cho, Iyo-gun, Ehime 791-2193 (JP); OKIMOTO, Akira, Tobe-cho, Iyo-gun, Ehime 791-2193 (JP); TANAKA, Seiji, Tobe-cho, Iyo-gun, Ehime 791-2193 (JP); SUSUKI, Yuta, Tobe-cho, Iyo-gun, Ehime 791-2193 (JP)
(74) Representative: Spengler, Robert

(56) References cited:
- EP-A2- 3 225 087
- CN-A- 101 258 792
- JP-A- 2011 089 450
- JP-A- 2014 226 072

## Description

### BACKGROUND OF THE INVENTION

### Field of the Invention

The present invention relates to a walking-type tilling machine.

### Related Art of the Invention

Conventionally, a walking-type tilling machine is known which tills a farm field, and performs ridging work (for example, refer to Japanese Patent Application Publication No. 2014-226072).

In this conventional walking-type tilling machine, the front cover and the rear cover which cover the engine are individually being fixed to the machine-body separately with bolts and the like.

Document JP 2011 089450 A discloses a walking-type tilling machine comprising a traveling vehicle-wheel; an operating handle arranged behind the traveling vehicle-wheel; a tilling claw which tills a farm field; and an engine which rotates the traveling vehicle-wheel and the tilling claw.

Similar walking-type tilling machines are disclosed in documents EP 3 225 087 A2 and JP 2014 226072 A, as well as in document CN 101 258 792 A.

### SUMMARY OF THE INVENTION

However, by the configuration of the aforesaid conventional walking-type tilling machine, when the front cover and the rear cover is attached to the machine-body, adjustment of a gap and a distance between the front cover and the rear cover is sometimes troublesome.

A purpose of the present invention is, in consideration a problem like this of the aforesaid conventional walking-type tilling machine, to furnish a walking-type tilling machine which does not necessitate troublesomeness for adjustment of a gap and a distance between the front cover and the rear cover.

The 1^{st} aspect of the present invention is a walking-type tilling machine (100), comprising:
a traveling vehicle-wheel;
an operating handle arranged behind the traveling vehicle-wheel;
a tilling claw which tills a farm field; and
an engine (7) which rotates the traveling vehicle-wheel and the tilling claw,
wherein
the walking-type tilling machine comprises a front hood (8) and a rear hood (9), which cover the engine from above,
the rear hood is fixed to a machine-body (1) by fixing means, and
the front hood is being connected with the rear hood, wherein
in a state where the front hood is being connected with the rear hood, one part of the front hood is going into an inside of one part of the rear hood, and another one part of the rear hood is going into an inside of another one part of the front hood,
in a state where the front hood is being connected with the rear hood, one part of a rear end-part of the front hood is going into an inside of one part of a front end-part of the rear hood, and another one part of the front end-part of the rear hood is going into an inside of another one part of the rear end-part of the front hood,
the front hood is being connected with the rear hood by engaging means (80a, 963),
the rear end-part of the front hood is being connected with the front end-part of the rear hood by engaging means (80a, 963),
the engaging means are configured with a convex part or a hole part of the front hood side, and a hole part or a convex part of the rear hood side,
at left-and-right both side-parts of the front end-part of the rear hood, first guiding parts (932) which guide left-and-right both side-parts of the rear end-part of the front hood are individually formed, and
when the front hood is connected with the rear hood, by the individual first guiding parts, individual first guided parts (821a-1, 821a-2, 821a-3) of the left-and-right both side-parts of the rear end-part of the front hood are guided and further, in a state where the front hood is being connected with the rear hood, the individual first guiding parts support the front hood.

By this, position adjustment of a gap and the like between the front hood and the rear hood becomes easy, and position deviation can be restrained by mutual constraint between the front hood and the rear hood. By the engaging means, connection is simple; and by the mutual connection between a convex part and a hole, assembly is simple. Furthermore, in a case of connecting and integrating the front hood with the rear hood, while easily and in addition precisely adjusting the position by the existence of the guiding parts, the front hood can be connected with the rear hood.

The 2^{nd} aspect of the present invention is the walking-type tilling machine according to the 1^{st} aspect of the present invention, wherein
a second guided part (801) is provided at any one of one part of the machine-body and a lower face of the front hood, said one part being positioned below a frontward part of the front hood in a state where the front hood is being connected with the rear hood, and a second guiding part (1a) which guides the second guided part is provided at another one, and
when the front hood is connected with the rear hood, the second guided part is guided by the second guiding part.

By this, in a case of connecting and integrating the front hood with the rear hood, while easily and in addition precisely adjusting the position by the existence of the guiding parts, the front hood can be connected with the rear hood.

By the present invention, a walking-type tilling machine which does not necessitate troublesomeness for adjustment of a gap and a distance between the front cover and the rear cover can be furnished.

### BRIEF DESCRIPTION OF THE DRAWINGS

FIG. 1 is a whole-body side view of the walking-type tilling machine in the embodiment of the present invention;
FIG. 2 is a section view of the front hood and the rear hood of the walking-type tilling machine in the embodiment of the present invention, in a state of having been connected and integrated;
FIG. 3 is a perspective view of the front hood and the rear hood of the walking-type tilling machine in the embodiment of the present invention, before connection and integration;
FIG. 4 is a perspective view which shows the left-and-right side-part which is one part of the rear end-part of the front hood of FIG. 3;
FIG. 5 is a perspective view which shows the left-and-right side-part which is one part of the front end-part of the rear hood of FIG. 3;
FIG. 6 is a perspective view which shows the structure of the front side of the machine-body, in a state where the front hood and the rear hood of the walking-type tilling machine of FIG. 1 have been detached;
FIG. 7 is a perspective view which shows one part of the machine-body of FIG. 6;
FIG. 8 is a perspective view which shows a variant example of the tongue piece of FIG. 7;
FIG. 9 is a perspective view which shows a separate variant example of the tongue piece of FIG. 7;
FIG. 10 is a perspective view which shows the lower face of the frontward part of the front hood of FIG. 2;
FIG. 11 is a perspective view for which one part of the lower face of the frontward part of the front hood of FIG. 10 has been enlarged;
FIG. 12 is a perspective view which shows the front hood and the rear hood of the walking-type tilling machine in the embodiment of the present invention, in a state of being going to be connected and integrated; and
FIG. 13 is a perspective view which shows the front hood and the rear hood of the walking-type tilling machine in the embodiment of the present invention, in a state after having been connected and integrated.

### Description of the Reference Numerals

- 1: machine-body
- 1a: second guiding part
- 1a1: bottom face
- 1a2: regulating plate
- 1b: tongue piece
- 1b-1: elastic body
- 1b-2: elastic body
- 101: receiving part stay
- 102: fuel tank stay
- 2: transmission case
- 3: supporting frame
- 4: traveling vehicle-wheel
- 6: tilling claw
- 7: engine
- 70: muffler cover
- 8: front hood
- 80: engaging member
- 80a: pushing-down part
- 80b: tip-end side
- 80c: extendingly-provided portion
- 81: ceiling part
- 82: left-and-right side-part
- 821: rear end-edge
- 821a: notch part
- 821a-1: front side-part
- 821a-2: upper side-part
- 821a-3: flange part
- 821b: upper-half part
- 83: frontward part
- 801: second guided part
- 801a: inclining face part
- 84: rear end-part
- 84a: rearmost end-edge
- 841: left-and-right side-part
- 842: center part
- 842a: cut
- 9: rear hood
- 91: ceiling part
- 92: rear side-part
- 93: left-and-right side-part
- 931: front end-edge
- 931a: upper-half part
- 932: guiding face part
- 932a: upper end-edge
- 933: left-and-right direction guiding face part
- 94: frontward part
- 95: hole
- 96: front end-part
- 961: left-and-right side-part
- 96a: frontmost end-edge
- 962: center part
- 963: hole part
- 964: bottom face
- 10: handle
- 11: fuel tank
- 11a: upper face
- 12: cap
- 13: bolt
- 14: ring nut
- 100: walking-type tilling machine
- M: width
- L: width
- A, B, C, D, E: bolt

### DESCRIPTION OF THE EMBODIMENTS

In the following, while referring to the drawings, the configuration and action of the walking-type tilling machine of one embodiment of the present invention is described.

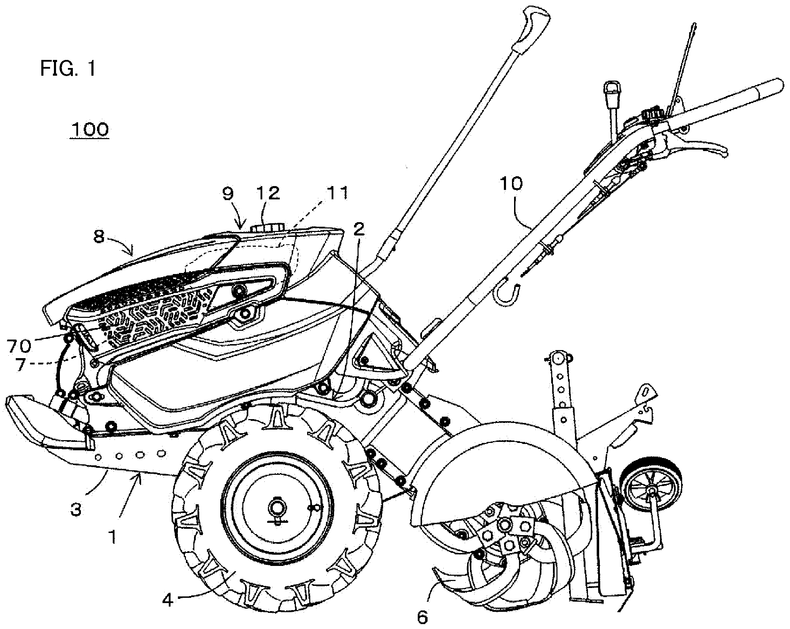

FIG. 1 is a whole-body side view of the walking-type tilling machine in the present embodiment.

In the first place, utilizing FIG. 1, descriptions are given regarding the whole-body configuration of a walking-type tilling machine 100 in the present embodiment.

As shown in FIG. 1, a machine-body 1 of the walking-type tilling machine 100 has, in the side view, a transmission case 2, and a supporting frame 3 and the like provided at the front side of the transmission case 2. The axle is protrudingly provided at the lower part of the front side-case which configures the transmission case 2, a left-and-right pair of traveling vehicle-wheels 4 is rotatably provided and, moreover, the tilling apparatus is configured for which the tilling shaft is protrudingly provided at the lower part of the rear side-case and plural tilling claws 6 are provided. A handle 10 is attached to the transmission case 2.

In FIG. 1, the reference numeral 7 is an engine, and an attachable-and-detachable front hood 8 is being installed thereabove for checking the ignition plug. The reference numeral 70 is a muffler cover. The reference numeral 11 is a fuel tank, and a rear hood 9 which covers the fuel tank 11 is being installed. The reference numeral 12 is a cap of the fuel tank 11.

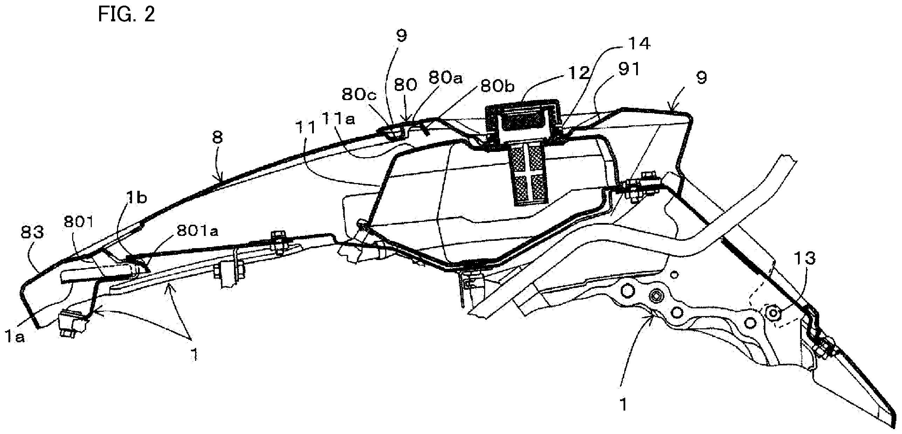

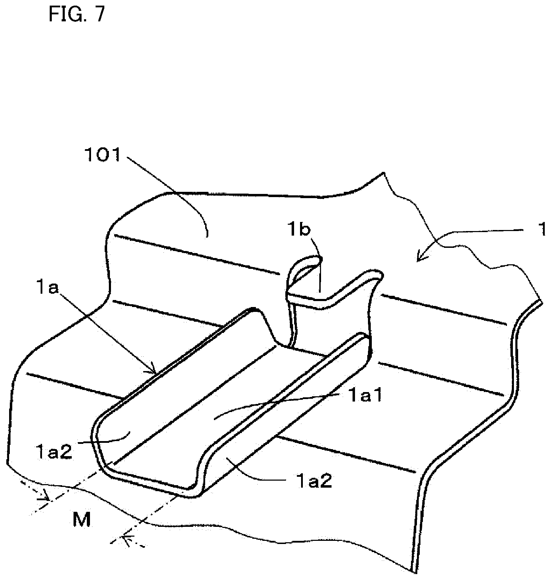

Next, while referring to FIGs. 2 to 11, the structure of the aforesaid front hood 8 and rear hood 9 is described in detail.

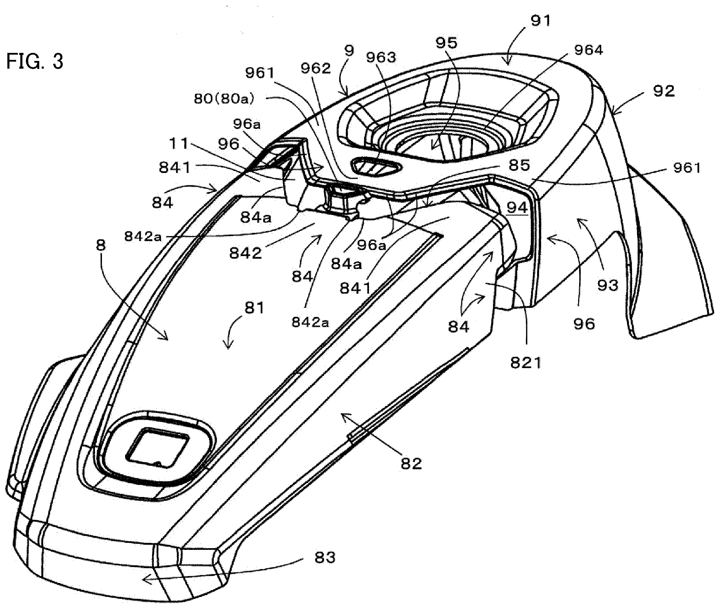

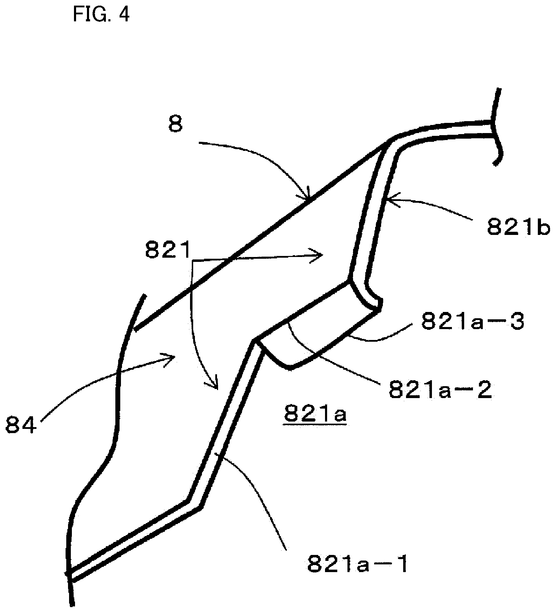

FIG. 2 is a section view centering around the front hood 8 and the rear hood 9 in a state of having been connected and integrated, and the fuel tank 11 in the embodiment of the present invention, and FIG. 3 is a perspective view of the front hood 8 and the rear hood 9 of the walking-type tilling machine in the embodiment of the present invention, before connection and integration. Moreover, FIGs. 4 to 11 are perspective views for which one part of the front hood 8, one part of the rear hood 9, or one part of the machine-body 1 has been enlarged.

The rear hood 9 is shaped in the form of a rounded box which is configured from a ceiling part 91, a rear side-part 92, and left-and-right side-parts 93, and a frontward part 94 thereof is opened, and configures a front end-part 96.

The rear hood 9 is being fixed to the machine-body 1 with a bolt 13, and is being fixed to the fuel tank 11 with a ring nut 14.

The fuel tank 11 is arranged under the rear hood 9. Additionally, the reference numeral 95 is a hole formed in a bottom face 964 of a mortar-shaped concavity formed at the center of the ceiling part 91, and is a place to which the fuel tank 11 is attached.

The front end-part 96 of the ceiling part 91 in the rear hood 9 is shaped in a shape for which a center part 962 frontwardly protrudes with respect to left-and-right side-parts 961. A hole part 963 is bored at the center part 962. The hole part 963 is an example of one part of the engaging means of the present invention.

Additionally, the front end-part 96 of the ceiling part 91 is an example of the front end-part of the rear hood of the present invention, and the front end-part of the rear hood of the present invention also includes the front end-parts 96 of the left-and-right side-parts 93.

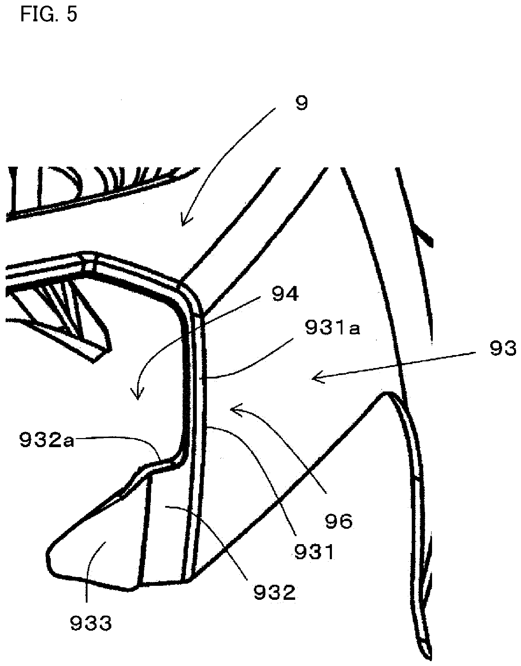

Moreover, as shown in FIG. 5, guiding face parts 932 bent toward the inside to be formed are individually provided in the downward parts of front end-edges 931 of the front end-parts 96 of the left-and-right side-parts 93 of the rear hood 9. The guiding face parts 932 are examples of the first guiding parts of the present invention. The guiding face part 932 is forming an inclining face which is rising toward the rear direction. As will be described later, this inclining face plays the role of guiding the front hood 8 while raising the front hood 8 to the integration position little by little, at the time when the front hood 8 is connected and integrated. Moreover, an upper end-edge 932a of the guiding face part 932 is a portion which plays the role of supporting the front hood 8 from below under the state where the front hood 8 has finished integration.

Further, at the inside edge of the guiding face part 932, a left-and-right direction guiding face part 933 is provided, which is approximately frontwardly bent to be formed and also has the guiding function. The left-and-right direction guiding face part 933 is being bent a little obliquely toward the inside. As will be described later, the left-and-right direction guiding face part 933 plays the role of guiding the front hood 8 in such a manner that the front hood 8 is not shaken in the left-and-right direction, at the time when the front hood 8 is connected and integrated. At the time thereof, the left-and-right direction guiding face part 933 is being bent a little obliquely toward the inside, and thereby the front hood 8 is inserted with ease.

On the other hand, the front hood 8 is shaped in the form of a rounded box which has a ceiling part 81, left-and-right side-parts 82 and a frontward part 83. A rearward part 85 thereof is opened, and configures a rear end-part 84.

The rear end-part 84 of the ceiling part 81 in the front hood 8 is shaped in a shape for which a center part 842 between left-and-right side-parts 841 thereof is frontwardly drawn. The rear end-part 84 is just shaped in such a shape as corresponds to the front end-part 96 of the rear hood 9.

Additionally, the rear end-part 84 of the ceiling part 81 is an example of the rear end-part of the front hood of the present invention, and the rear end-part of the front hood of the present invention also includes the rear end-parts 84 of the left-and-right side-parts 82.

Additionally, a rearmost end-edge 84a of the rear end-part 84 of the ceiling part 81 of the front hood 8 is configured so as to be, in a state where the front hood 8 has been connected and integrated, made to get under the lower side (the inside) of a frontmost end-edge 96a of the front end-part 96 of the ceiling part 91 of the rear hood 9, and be fitted together into the frontmost end-edge 96a. The rearmost end-edge 84a is an example of the one part of the rear end-part of the front hood of the present invention. Moreover, the frontmost end-edge 96a of the front end-part 96 of the ceiling part 91 of the rear hood 9 is an example of the one part of the front end-part of the rear hood of the present invention.

At the center part 842 of the rear end-part 84 of the ceiling part 81 of the front hood 8, an engaging member 80 extendingly provided rearwardly from the edge thereof and formed is provided. As shown in FIG. 2, one part of an extendingly-provided portion 80c of the engaging member 80 is flexed. By this, elasticity is given. A pushing-down part 80a which has the shape of a convex part is formed at the rear end of the engaging member 80, and the shape of this convex part corresponds to the shape of the aforesaid hole part 963 of the rear hood 9. The pushing-down part 80a and the hole part 963 are examples of the engaging means of the present invention.

Further, as shown in FIG. 3, at the position of the edge of the center part 842, where the root of the engaging member 80 is extendingly provided and formed, cuts 842a are boringly provided individually at left-and-right two spots, and the engaging member 80 deflects with ease in the up-and-down direction with elastic force.

Additionally, even in a case of having, as a variant example, provided an engaging member at the rear hood 9 side and provided a hole part at the front hood 8 side, it is desirable that cuts should be formed at left-and-right two spots of the root of the engaging member of the rear hood 9 side.

Moreover, as shown in FIG. 2, the design is such that, at the time when the pushing-down part 80a is pushed down from above by a finger, while opening up a predetermined additional space, an upper face 11a of the aforesaid fuel tank 11 is positioned therebelow. By this, when the pushing-down part 80a is pushed down by a finger, the pushing-down part 80a abuts against the upper face 11a of the fuel tank 11 below even if strongly pushing in excess, and thereby such an accident can be prevented that the pushing-down part 80a is broken with pushing-down in excess.

Additionally, also in a case where, as a variant example, an engaging member is provided at the rear hood 9 side, it is desirable that, as a stopper at the time of pushing-down thereof, the upper face 11a of the fuel tank 11 should function.

Additionally, a tip-end side 80b of the pushing-down part 80a is shaped like a taper and, at the time when the front hood 8 is connected and integrated, the pushing-down part 80a abuts onto the edge of the center part 962 of the front end-part 96 of the rear hood 9, and gets thereunder with ease.

On the other hand, as shown in FIGs. 3 and 4, in individual rear end-edges 821 of the left-and-right side-parts 82 of the front hood 8, frontward notch parts 821a are formed in the lower half. A front side-part 821a-1 of the notch part 821a is inclining, and the frontward cut thereof becomes deeper as downwardly going. The degree of this inclining corresponds to the inclining of the aforedescribed guiding face part 932 of the rear hood 9.

Moreover, a flange part 821a-3 is bent toward the inside and formed at an upper side-part 821a-2 of the notch part 821a. The flange part 821a-3 mounts, in a state where the front hood 8 has been connected and integrated, on the upper end-edge 932a of the guiding face part 932 of the rear hood 9, and the upper end-edge 932a supports the flange part 821a-3. By this, the rear hood 9 supports the front hood 8.

The front side-part 821a-1, the upper side-part 821a-2 and the flange part 821a-3 of the aforesaid notch part 821a are examples of the first guided parts of the present invention.

Further, in a state where the front hood 8 has been connected and integrated, the guiding face part 932 and the left-and-right direction guiding face part 933 of the rear hood 9 are positioned in the inside of the front side-part 821a-1 of the notch part 821a of the front hood 8. The front side-part 821a-1 of the notch part 821a of the rear end-part 84 of the front hood 8 is an example of the another one part of the rear end-part of the front hood of the present invention. Moreover, the guiding face part 932 and the left-and-right direction guiding face part 933 of the front end-part 96 of the rear hood 9 are examples of the another one part of the front end-part of the rear hood of the present invention.

Further, the flange part 821a-3 of the front hood 8 abuts, at the time when the front hood 8 is connected and integrated, against the aforedescribed left-and-right direction guiding face part 933 of the rear hood 9, and is thereby guided so as not to be shaken in the left-and-right direction.

Moreover, the state becomes such that upper-half parts 821b of the individual rear end-edges 821 of the left-and-right side-parts 82 of the front hood 8 have been, in a case of having connected and integrated the front hood 8, inserted and fitted together into the insides of upper-half parts 931a of the front end-edges 931 of the left-and-right side-parts 93 of the rear hood 9. By this, after connection and integration, motion of the front hood 8 in the left-and-right direction is regulated. The upper-half part 821b of the rear end-edge 821 of the front hood 8 is an example of the one part of the rear end-part of the front hood of the present invention. Moreover, the upper-half part 931a of the front end-edge 931 of the rear hood 9 is an example of the one part of the front end-part of the rear hood of the present invention.

Next, descriptions are given regarding the connection structure of the frontward part 83 of the front hood 8 to the machine-body 1.

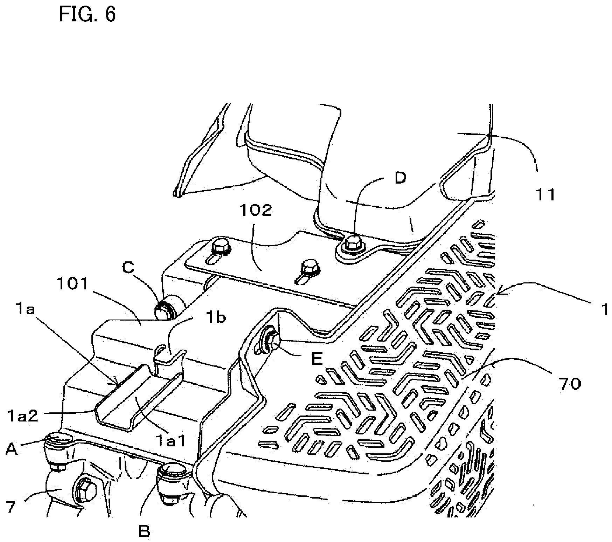

In FIG. 6, a second guiding part 1a is provided in a receiving part stay 101 which is one part of the machine-body 1. The receiving part stay 101 is being set to the engine 7 by bolts A, B and C. Moreover, the front part of the fuel tank 11 is, by a bolt D, being fixed to a fuel tank stay 102 which is one part of the machine-body 1. Further, the front part of the muffler cover 70 is being fixed to the receiving part stay 101 by a bolt E.

Detailed descriptions are given in the following regarding the second guiding part 1a. In FIGs. 2, 6 and 7, as aforedescribed, the second guiding part 1a is provided in the machine-body 1. That is to say, in one part of the machine-body 1 which is positioned below the frontward part 83 of the front hood 8 in a state where the front hood 8 has been connected and integrated, the second guiding part 1a is provided.

The second guiding part 1a is in a sectional U-shape of the upward orientation and is extending long in the front-and-rear direction. The reference numeral 1a1 is a bottom face thereof, and the reference numerals 1a2 are regulating plates standingly provided at both sides of the bottom face 1a1. In addition, the regulating plates 1a2 of both sides are standingly provided in such a manner that upward spacing becomes broader than downward spacing. By this, when the front hood 8 is lowered from above oncomingly, a second guided part 801 of the front hood 8 described later enters with ease.

More desirably, the regulating plates 1a2 of both sides should be opened in such a manner that frontward spacing becomes broader than rearward spacing. This is because the front hood 8 is made to enter from above with more ease.

Further, in another one part of the machine-body 1 which is positioned behind the second guiding part 1a, a tongue piece 1b with elasticity more or less given is provided in a shape which frontwardly protrudes.

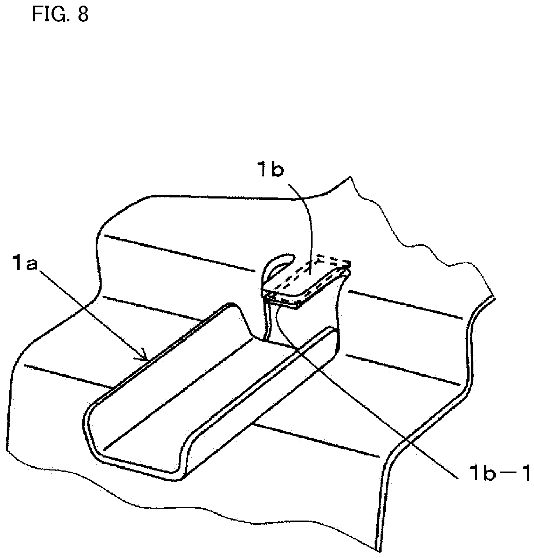

FIG. 8 is a variant example of the tongue piece 1b, and an elastic body 1b-1 is stuck on the lower side. As will be described later, in a case of having pressed the front hood 8, up-and-down vibration thereof can be restrained by the existence of the elastic body 1b-1.

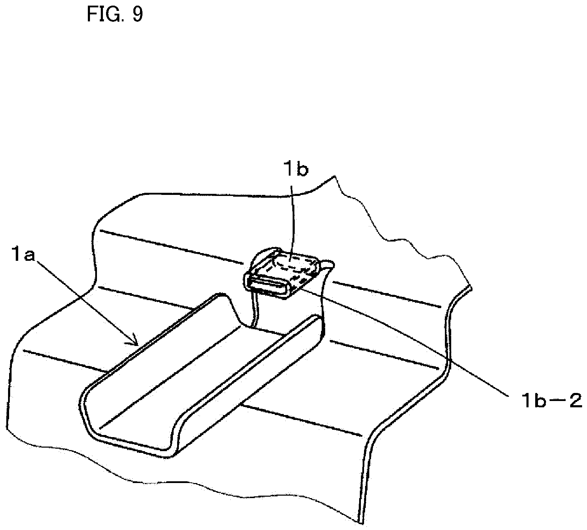

FIG. 9 is further a variant example of the tongue piece 1b, and an elastic body 1b-2 is fitted to the circumference. In a case of having pressed the front hood 8, up-and-down vibration thereof can be restrained also in this case.

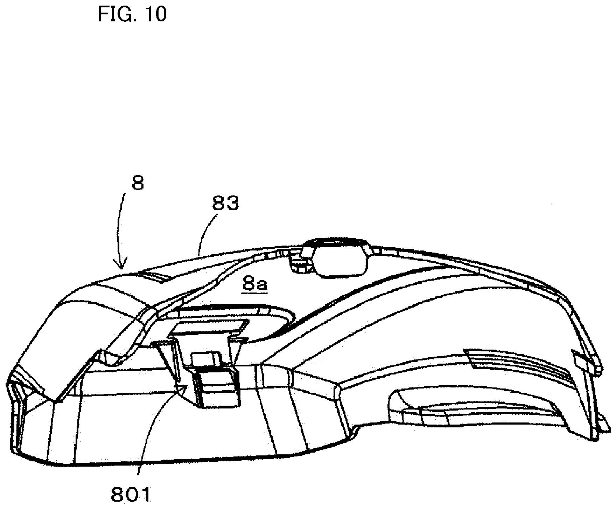

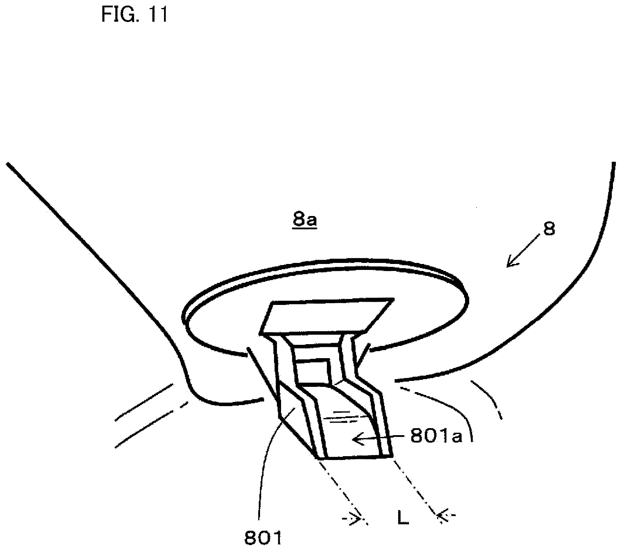

On the other hand, as shown in FIG. 10, to the lower face (the inner face) 8a of the frontward part 83 of the front hood 8, the second guided part 801 is being set under the state of downwardly protruding in rear oblique orientation. FIG. 11 is a view for which the second guided part 801 has been enlarged. As shown in FIG. 11, the second guided part 801 is shaped in a shape for which a width L of the lower end-part thereof is a little narrower than a width M of the aforesaid second guiding part 1a and, at the time when the front hood 8 is connected and integrated, the second guided part 801 can slide while mounting on the second guiding part 1a. The vertical section of the lower end-part is shaped in an approximately right-angled shape, and the second guided part 801 mounts on the second guiding part 1a with ease.

Moreover, the regulating plate 1a2 has the function of preventing lateral shaking at the time of sliding thereof.

Further, the upper face of the lower end-part of the second guided part 801, namely the face which faces on the lower face 8a side of the front hood 8 is forming an inclining face part 801a which is downwardly inclining in rear oblique orientation.

As will be described later, under the state where the front hood 8 has been connected and integrated, the aforesaid tongue piece 1b mounts onto the inclining face part 801a, the tongue piece 1b presses down the inclining face part 801a, and uplifting of the frontward part 83 of the front hood 8 is being prevented.

Next, the process of connecting and integrating the front hood 8 with the rear hood 9 is described in accordance with FIGs. 2, 3, 12 and 13.

In the first place, as shown in FIG. 3, the front hood 8 is held with both hands, and the front hood 8 is inserted into the rear hood 9 side ongoingly, under such a state that the rear end-part 84 thereof gets under the lower side of the front end-part 96 of the rear hood 9, and besides, under such a state that the upper side-parts 821a-2, or alternatively the flange parts 821a-3 of the notch parts 821a, which exist at the left-and-right both sides, abut onto the guiding face parts 932, or alternatively the left-and-right direction guiding face parts 933 of the rear hood 9.

It is desirable that the size and the shape should be designed beforehand in such a manner that, at the time thereof, before the pushing-down part 80a of the engaging member 80 of the rear end-part 84 of the front hood 8 reaches the front end-part 96 of the rear hood 9, the upper side-parts 821a-2 and the flange parts 821a-3 of the notch parts 821a of the front hood 8 abut onto the guiding face parts 932 and the left-and-right direction guiding face parts 933 of the rear hood 9. By this, without shaking in the left-and-right direction, assembling becomes easy.

Additionally, even in a case of having, as a variant example, provided notch parts at the rear hood 9 side and provided guiding face parts and left-and-right direction guiding face parts at the front hood 8 side, it is desirable that the size and the shape should be similarly designed.

At the time thereof the design is such that, as aforedescribed, the lower end of the second guided part 801 of the lower face of the front hood 8 mounts on the second guiding part 1a which is provided at the machine-body 1 side, and is supported.

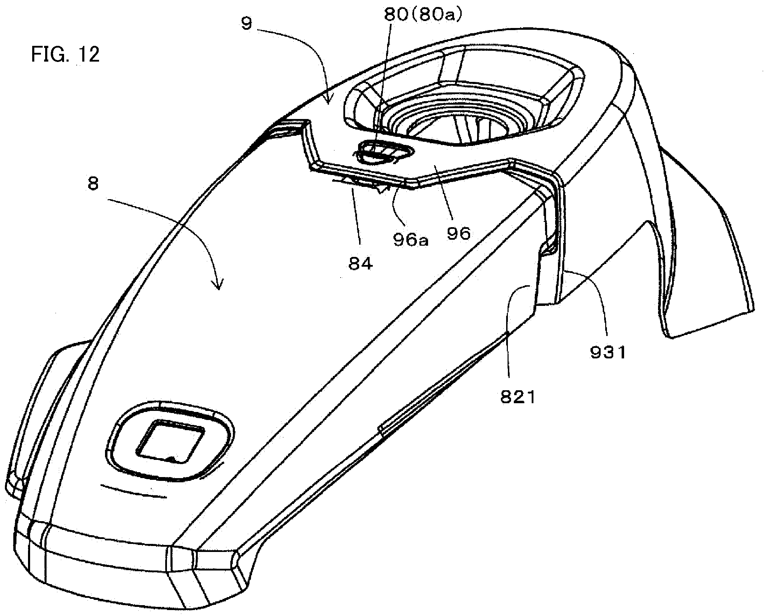

Next, as shown in FIG. 12, when the front hood 8 is further moved to the rear hood 9 side, since the rear end-part 84 of the front hood 8 is moved at a position which is a little lower than the position of the front end-part 96 of the rear hood 9, then the pushing-down part 80a of the engaging member 80 of the front hood 8 gets under the lower side of the frontmost end-edge 96a of the rear hood 9 while deflecting with elastic force.

At the time thereof, the upper side-parts 821a-2 and the flange parts 821a-3 of the aforesaid notch parts 821a abut onto the guiding face parts 932 of the rear hood 9, further rise ongoingly while abutting along the inclining faces thereof, and mount onto the upper end-edges 932a of the rear hood 9.

Moreover, at the time thereof, depending on the way of holding the front hood 8, the front side-parts 821a-1 of the notch parts 821a of the front hood 8, and the upper side-parts 821a-2 and the flange parts 821a-3 of the aforesaid notch parts 821a abut onto the left-and-right direction guiding face parts 933 of the rear hood 9, and are thereby guided so as not to be shaken in the left-and-right direction.

Further, at the time thereof, the lower end of the second guided part 801 of the lower face of the front hood 8 mounts continuously on the second guiding part 1a which is provided at the machine-body 1 side and slides ongoingly while further being rearwardly guided. At the time thereof, the regulating plate 1a2 prevents lateral shaking of the front hood 8 at the time of sliding thereof.

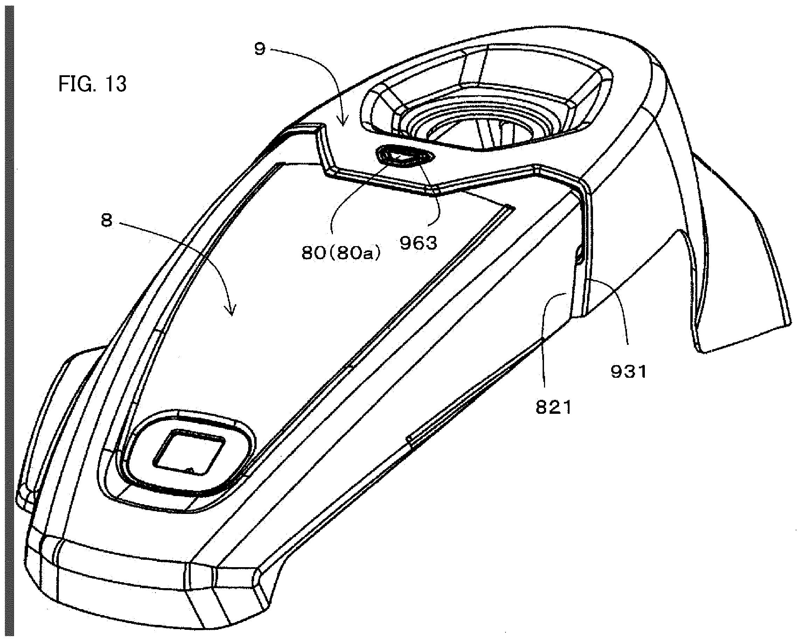

Next, as shown in FIG. 13, the front hood 8 is further pushed into the rear hood 9. As a result, the engaging member 80 of the front hood 8 reaches the position of the hole part 963 of the rear hood 9, upwardly rises by elastic force thereof, and fits into the hole part 963. After the engaging member 80 fitting into the hole part 963, by energizing force of the engaging member 80, coming-out of the engaging member 80 can be prevented.

At the same time, the front side-parts 821a-1 of the notch parts 821a of the front hood 8 abut against the guiding face parts 932 of the rear hood 9, and the front hood 8 is not rearwardly pushed into the rear hood 9 anymore. Moreover, under this state, as aforedescribed, the state becomes such that the upper side-parts 821a-2 and the flange parts 821a-3 of the notch parts 821a have been supported by the upper end-edges 932a of the rear hood 9.

Further, at the same time, as shown in FIG. 2, since at a place which is positioned behind the second guiding part 1a, the tongue piece 1b with elasticity given is provided in a shape which frontwardly protrudes, the tongue piece 1b mounts onto the inclining face part 801a of the upper face of the lower end-part of the second guided part 801 of the lower face of the front hood 8, which has mounted continuously on the second guiding part 1a of the machine-body 1 and slid oncomingly, the tongue piece 1b presses down the inclining face part 801a, and uplifting of the frontward part 83 of the front hood 8 is prevented.

Like this, the state becomes such that the front hood 8 has been connected with the rear hood 9, and been firmly set also to the machine-body 1.

As a result, since the reciprocal hoods 8 and 9 are going into the reciprocal insides, also in a case of having been viewed from above, and also in a case of having been laterally viewed, a gap is not generated at the seam-part of those hoods, and adjustment at the time of assembling becomes unnecessary.

Moreover, under the state where the front hood 8 has been connected and integrated, since the engaging member 80 which is a convex part of the front hood 8 is fitting into the hole part 963 of the rear hood 9, there is no worry about position deviation in the front-and-rear direction.

Additionally, in contrast, it is also permitted that a hole is provided at the front hood 8, and that a convex part is provided at the rear hood 9. In this case, it is desirable that the front hood 8 should come above the rear hood 9.

Additionally, in a case of detaching the front hood 8 from the rear hood 9, while pushing down the engaging member 80 by a finger, the front hood 8 is frontwardly drawn out. Even under the state where the aforesaid tongue piece 1b is pressurizing the inclining face part 801a, since the inclining face part 801a is an inclining face which is rising toward the front direction, the engaging member 80 smoothly gets apart when being frontwardly drawn out.

Moreover, as another embodiment, in contrast, it is also permitted that, in the upper face and the upper half of the side-part, the rear hood 9 goes into the inside of the front hood 8 and that, in the lower half of the side-part, the rear hood 9 comes to the outside of the front hood 8. Also like this, adjustment at the time of assembling becomes unnecessary. Moreover, in the side-part, since the front hood 8 and the rear hood 9 go into each other in such a manner that the overlapping relationship is reversed halfway, the upper end-edge 932a of the rear hood 9 supports the upper side-part 821a-2 of the notch part 821a of the front hood 8. Like this, the front hood 8 and the rear hood 9 may go into each other in the side-part in such a manner that the overlapping relationship interchanges halfway. By this, uplifting of the rear end of the front hood after assembling can be prevented.

Moreover, since the engaging member 80 is being upwardly energized with elastic force, coming-out of the convex part of the pushing-down part 80a from the hole part 963 can be prevented. Moreover, as aforedescribed, even in a case where the relationship between the convex part and the hole part of the front hood 8 and the rear hood 9 is reversed, coming-out can be prevented with elasticity being given.

Moreover, it is desirable that the engaging member 80 of the front hood 8 should be positioned at the center of the machine-body 1, with reference to the left-and-right direction. By this, restraining effect of the deviation prevention in the left-and-right direction is exerted equally in the left-and-right direction, and the assembling position is stabilized. Moreover, also in a case of having provided in contrast an engaging member at the rear hood 9 side, it is desirable that the engaging member should be positioned at the center of the machine-body 1 with reference to the left-and-right direction.

Moreover, two engaging members 80 of the front hood 8 can also be provided and, in this case, the engaging members 80 are installed so as to become symmetric in the left-and-right direction, with respect to the center of the machine-body 1 with reference to the left-and-right direction. Connection and integration becomes stronger and, what is more, balance in the left-and-right direction can be kept. Moreover, also in a case of having provided in contrast two engaging members at the rear hood 9 side, the engaging members are installed so as to become symmetric in the left-and-right direction, with respect to the center with reference to the left-and-right direction.

Moreover, in a case where, as a variant example, a rearward protruding part (a guiding face part) is formed at the front hood 8 side, and a notch part is provided at the rear hood 9 side, the rearward protruding part of the front hood 8 becomes a guide at the time of inserting in the side-part side from the upper face of the rear hood 9.

Moreover, as a variant example, structure is also realizable, for which a second guided part is provided at the front side of the machine-body 1 and a second guiding part is provided in the lower face (the inner face) of the front hood 8.

Also in a variant example like this, it is desirable that the second guiding part should be in a sectional U-shape of the downward orientation and extend long in the front-and-rear direction, that regulating plates should be formed at both sides, that downward spacing should become broader than upward spacing, and that frontward spacing should become broader than rearward spacing. Moreover, the section of the upper end-part of the second guided part of the machine-body 1 is shaped in an approximately right-angled shape, and the second guided part mounts on the second guiding part with ease.

A walking-type tilling machine pertaining to the present invention has an effect that troublesomeness for adjustment of a gap and a distance between the front cover and the rear cover is not necessitated, and is useful as a walking-type tilling machine.

## Claims

1. A walking-type tilling machine (100), comprising:
a travelling vehicle-wheel;
an operating handle arranged behind the travelling vehicle-wheel;
a tilling claw which tills a farm field;
an engine (7) which rotates the travelling vehicle-wheel and the tilling claw,
a front hood (8) and a rear hood (9), which cover the engine from above,
wherein the rear hood is fixed to a machine-body (1) by fixing means, and the front hood is being connected with the rear hood,
wherein in a state where the front hood is being connected with the rear hood, one part of the front hood is going into an inside of one part of the rear hood, and another one part of the rear hood is going into an inside of another one part of the front hood,
wherein in a state where the front hood is being connected with the rear hood, one part of a rear end-part (84) of the front hood is going into an inside of one part of a front end-part (96) of the rear hood, and another one part of the front end-part of the rear hood is going into an inside of another one part of the rear end-part of the front hood,
wherein the front hood is being connected with the rear hood by engaging means (80a, 963),
wherein the rear end-part of the front hood is being connected with the front end-part of the rear hood by engaging means (80a, 963),
wherein the engaging means are configured with a convex part (80a) of the front hood side, and a hole part (963) of the rear hood side,
wherein there are provided at left-and-right both side-parts of the front end-part (96) of the rear hood, first guiding parts (932) which guide left-and-right both side-parts of the rear end-part (84) of the front hood are individually formed,
wherein when the front hood is connected with the rear hood, by the individual first guiding parts, individual first guided parts (82Ia-I, 821a-2, 821a-3) of the left-and-right both side-parts of the rear end-part of the front hood are guided and further, in a state where the front hood is being connected with the rear hood, the individual first guiding parts support the front hood.

2. The walking-type tilling machine according to claim 1, wherein
a second guided part (801) is provided at any one of one part of the machine-body and a lower face of the front hood, said one part being positioned below a frontward part of the front hood in a state where the front hood is being connected with the rear hood, and a second guiding part (1a) which guides the second guided part is provided at another one,
when the front hood is connected with the rear hood, the second guided part is guided oy the second guiding part.

## Patentansprüche

1. Bodenfräse (100), Folgendes umfassend:
ein fahrendes Fahrzeugrad,
einen Bedienungsgriff, der hinter dem fahrenden Fahrzeugrad angeordnet ist,
eine Fräsklinge, die ein Landwirtschaftsfeld fräst,
einen Motor (7), der das fahrende Fahrzeugrad und die Fräsklinge dreht,
eine vordere Haube (8) und eine hintere Haube (9), die den Motor von oben abdecken,
wobei die hintere Haube mittels Befestigungsmitteln an einem Maschinenhauptteil (1) befestigt ist und die vordere Haube mit der hinteren Haube verbunden ist,
wobei ein Teil der vorderen Haube in einem Zustand, in dem die vordere Haube mit der hinteren Haube verbunden ist, in ein Inneres eines Teils der hinteren Haube verläuft und ein anderer Teil der hinteren Haube in ein Inneres eines anderen Teils der vorderen Haube verläuft,
wobei ein Teil eines hinteren Endteils (84) der vorderen Haube in einem Zustand, in dem die vordere Haube mit der hinteren Haube verbunden ist, in ein Inneres eines Teils eines vorderen Endteils (96) der hinteren Haube verläuft und ein anderer Teil des vorderen Endteils der hinteren Haube in ein Inneres eines anderen Teils des hinteren Endteils der vorderen Haube verläuft,
wobei der vordere Haube mit der hinteren Haube durch Eingriffsmittel (80a, 963) verbunden ist,
wobei der hintere Endteil der vorderen Haube mit dem vorderen Endteil der hinteren Haube durch Eingriffsmittel (80a, 963) verbunden ist,
wobei die Eingriffsmittel mit einem konvexen Teil (80a) der Seite der vorderen Haube und einem Öffnungsteil (963) der Seite der hinteren Haube gestaltet sind,
wobei sowohl links wie auch rechts an Seitenteilen des vorderen Endteils (96) der hinteren Haube erste Führungsmittel (932) bereitgestellt sind, die sowohl das linke als auch das rechte Seitenteil des hinteren Endteils (84) der vorderen Haube führen und individuell geformt sind,
wobei individuelle erste geführte Teile (82Ia-I, 821a-2, 821a-3) sowohl des linken als auch des rechten Seitenteils des hinteren Endteils der vorderen Haube geführt sind, wenn die vordere Haube durch die individuellen ersten Führungsteile mit der hinteren Haube verbunden ist, und ferner die individuellen ersten Führungsteile in einem Zustand, in dem die vordere Haube mit der hinteren Haube verbunden ist, die vordere Haube tragen.

2. Bodenfräse nach Anspruch 1, wobei
ein zweiter geführter Teil (801) an einem beliebigen Teil von dem Maschinenhauptteil und einer Unterseite der vorderen Haube bereitgestellt ist, wobei der eine Teil in einem Zustand, in dem die vordere Haube mit der hinteren Haube verbunden ist, unter einem vorwärts gerichteten Teil der vorderen Haube positioniert ist, und ein zweiter Führungsteil (1a), der den zweiten geführten Teil führt, an einem anderen bereitgestellt ist,
wobei der zweite geführte Teil von dem zweiten Führungsteil geführt wird, wenn die vordere Haube mit der hinteren Haube verbunden ist.

## Revendications

1. Machine de préparation du sol (100) de type à conducteur à pied, comprenant :
une roue de véhicule mobile ;
une poignée de commande agencée derrière la roue de véhicule mobile ;
une griffe de préparation du sol qui prépare le sol d'un champ agricole ;
un moteur (7) qui fait tourner la roue de véhicule mobile et la griffe de préparation du sol,
un capot avant (8) et un capot arrière (9), qui recouvrent le moteur de dessus,
dans laquelle le capot arrière est fixé à un corps de machine (1) par des moyens de fixation, et le capot avant est raccordé au capot arrière,
dans laquelle, dans un état dans lequel le capot avant est raccordé au capot arrière, une partie du capot avant va dans un intérieur d'une partie du capot arrière et une autre partie du capot arrière va dans un intérieur d'une autre partie du capot avant,
dans laquelle, dans un état dans lequel le capot avant est raccordé au capot arrière, une partie d'une partie d'extrémité arrière (84) du capot avant va dans un intérieur d'une partie d'une partie d'extrémité avant (96) du capot arrière, et une autre partie de la partie d'extrémité avant du capot arrière va dans un intérieur d'une autre partie de la partie d'extrémité arrière du capot avant,
dans laquelle le capot avant est raccordé au capot arrière par des moyens de mise en prise (80a, 963),
dans laquelle la partie d'extrémité arrière du capot avant est raccordée à la partie d'extrémité avant du capot arrière par des moyens de mise en prise (80a, 963),
dans laquelle les moyens de mise en prise sont configurés avec une partie convexe (80a) du côté du capot avant, et une partie de trou (963) du côté du capot arrière,
dans laquelle on prévoit deux parties latérales gauche et droite de la partie d'extrémité avant (96) du capot arrière, des premières parties de guidage (932) qui guident les deux parties latérales gauche et droite de la partie d'extrémité arrière (84) du capot avant, sont formées individuellement,
dans laquelle lorsque le capot avant est raccordé au capot arrière, par les premières parties de guidage individuelles, des premières parties guidées (82Ia, 821a-2, 821a-3) individuelles des deux parties latérales gauche et droite de la partie d'extrémité arrière du capot avant sont guidées et en outre, dans un état dans lequel le capot avant est raccordé au capot arrière, les premières parties de guidage individuelles supportent le capot avant.

2. Machine de préparation du sol de type à conducteur à pied selon la revendication 1, dans laquelle :
une seconde partie guidée (801) est prévue au niveau de l'une quelconque parmi une partie du corps de machine et une face inférieure du capot avant, ladite une partie étant positionnée au-dessous d'une partie avant du capot avant dans un état dans lequel le capot avant est raccordé au capot arrière, et une seconde partie de guidage (1a) qui guide la seconde partie guidée est prévue au niveau d'une autre,
lorsque le capot avant est raccordé au capot arrière, la seconde partie guidée est guidée par la seconde partie de guidage.
